# FASCICULE DE BREVET EUROPEEN

(11) **EP 2 516 270 B1**
(45) Date de publication et mention de la délivrance du brevet: **06.07.2016**
(21) Numéro de dépôt: 10809295.8
(22) Date de dépôt: 20.12.2010
(51) Int. Cl.: B64D 33/02

(54) **PANNEAU POUR LE TRAITEMENT ACOUSTIQUE A EPAISSEUR EVOLUTIVE**
SCHALLBEHANDLUNGSPLATTE MIT SKALIERBARER DICKE
ACOUSTIC TREATMENT PANEL HAVING SCALABLE THICKNESS

(30) Priorité: 22.12.2009 FR 0959396
(43) Date de publication de la demande: 31.10.2012
(73) Titulaire: Airbus Opérations SAS, 31060 Toulouse (FR)
(72) Inventeur: PORTE, Alain, F-31770 Colomiers (FR); LECONTE, Cédric, 31000 Toulouse (FR)
(74) Mandataire: Fantin, Laurent
(86) Numéro de dépôt international: PCT/FR2010/052813
(87) Numéro de publication internationale: WO 2011/086273

(56) Documents cités:
- EP-A1- 1 013 910
- EP-A2- 1 357 279
- FR-A1- 2 929 991
- GB-A- 1 490 923
- US-A- 5 160 248

## Description

La présente invention se rapporte à un panneau pour le traitement acoustique à épaisseur évolutive.

Un ensemble propulsif d'aéronef comprend une nacelle dans laquelle est disposée de manière sensiblement concentrique une motorisation reliée par l'intermédiaire d'un mât au reste de l'aéronef.

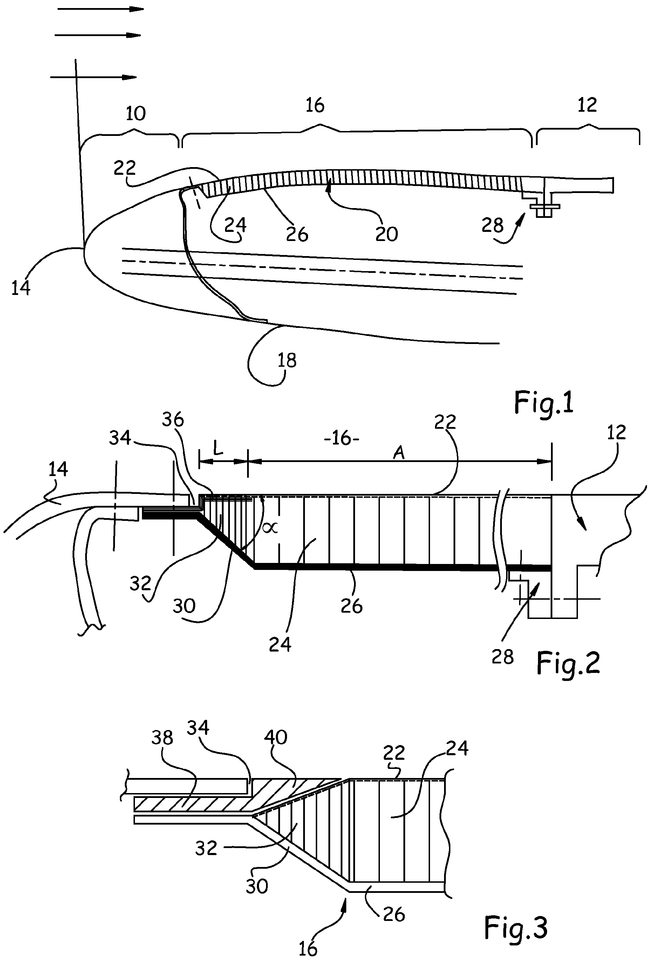

Comme illustré sur la figure 1, la nacelle comprend à l'avant une entrée d'air 10 permettant de canaliser un flux d'air en direction de la motorisation 12, une première partie du flux d'air entrant, appelée flux primaire, traversant la motorisation pour participer à la combustion, la seconde partie du flux d'air, appelée flux secondaire, étant entrainée par une soufflante et s'écoulant dans un conduit annulaire délimité par la paroi intérieure de la nacelle et la paroi extérieure de la motorisation.

L'entrée d'air 10 comprend une lèvre 14 dont la surface en contact avec les flux aérodynamiques est prolongée à l'intérieur de la nacelle par un conduit intérieur 16 de sections sensiblement circulaires et à l'extérieur de la nacelle par une paroi extérieure 18 de sections sensiblement circulaires.

Des techniques ont été développées pour réduire le bruit émis par un aéronef, et notamment le bruit émis par les ensembles propulsifs. Elles consistent à placer au niveau notamment de la paroi du conduit intérieur 16, un panneau ou revêtement 20 visant à absorber une partie de l'énergie sonore, notamment en utilisant le principe des résonateurs d'Helmholtz.

De manière connue (voir le document EP1013910), un panneau pour le traitement acoustique 20, également appelé revêtement d'atténuation acoustique, comprend de l'extérieur vers l'intérieur une couche poreuse acoustiquement résistive 22, au moins une structure alvéolaire 24 et une couche réflectrice ou imperméable 26.

Le conduit 16 doit assurer la reprise d'au moins une partie des efforts mécaniques entre la lèvre 14 et la motorisation 12. Pour limiter les contraintes au niveau de la couche poreuse acoustiquement résistive 22, la transmission des efforts entre la lèvre 14 et la motorisation 12 est effectuée essentiellement via la couche réflectrice 26.

A cet effet, une bride 28 assure la liaison entre la motorisation 12 et la couche réflectrice 26.

Pour assurer la liaison entre le conduit 16 et la lèvre 14, la couche réflectrice 26 est plaquée contre la couche poreuse acoustiquement résistive 22, les deux couches 22 et 26 étant solidarisées par tous moyens appropriés à la lèvre 14.

Pour cela, la couche réflectrice comprend à proximité de son extrémité orientée vers la lèvre 14 un pan fortement incliné 30 ( un angle de 45 à 60° par rapport à la couche acoustiquement résistive) sur une longueur L, de l'ordre de quelques centimètres, très nettement inférieure à la longueur restante A du conduit 16 (L représentant de l'ordre de 1% de A). Pour le maintien de cette forme géométrique, une structure alvéolaire 32 est prévue dans l'espace délimité par la couche poreuse acoustiquement résistive 22 et le pan incliné 30. Pour assurer la reprise des efforts de compression, la structure alvéolaire 32, généralement sous forme d'un nid d'abeilles, comprend des cellules avec des diamètres relativement faibles qui ne sont pas efficaces sur le plan du traitement acoustique contrairement aux cellules de la structure alvéolaire 24 dont les cellules sont dimensionnées pour le traitement acoustique.

Selon un autre aspect, le panneau pour le traitement acoustique 16 comprend un décrochement 34 au niveau de la surface en contact avec les flux aérodynamiques assurant le logement de l'extrémité de la lèvre et éventuellement un rebord du cadre avant, au droit duquel sont disposés les moyens de liaison.

Compte tenu de ce décrochement 34, selon une première variante illustrée sur la figure 2, la couche acoustiquement résistive 22 comprend des plis 36 de renfort pour assurer la transmission des efforts qui s'étendent depuis la zone en aval du décrochement 34 jusqu'au droit dudit décrochement.

La présence de ces plis 36 de renfort affecte la porosité de la couche acoustiquement résistive 22, si bien que le panneau 16 n'assure plus la fonction de traitement acoustique au droit de la zone de ces plis 36, qui correspond sensiblement à la zone non traitée en raison des dimensions réduites des cellules de la structure alvéolaire 32.

En variante, comme illustré sur la figure 3, le panneau pour le traitement acoustique 16 comprend une cale 38 avec un décrochement 34 et une forme en biseau 40 au niveau de laquelle la couche acoustiquement résistive 22 est solidarisée. Cette cale 38 n'étant pas poreuse, le panneau pour le traitement acoustique 16 n'assure plus la fonction de traitement acoustique au droit de la zone de la cale 38, qui correspond sensiblement à la zone non traitée en raison des dimensions réduites des cellules de la structure alvéolaire 32.

Ainsi selon les variantes de l'art antérieur, la zone de jonction entre le conduit 16 et la lèvre 14 et notamment la zone correspondant à la longueur L n'est pas traitée sur le plan acoustique.

Le document US-5.160.248 décrit un panneau pour le traitement acoustique comprenant à une extrémité un renfort pour résister à un choc de bris de pales de soufflante. Ce renfort comprend intercalé en deux plaques pleines un empilement de structures alvéolaires, la plaque pleine arrière étant faiblement inclinée. Les structures alvéolaires du renfort sont dimensionnées pour résister au choc et non pour traiter les ondes acoustiques. Selon un autre aspect, la plaque pleine en contact avec les flux aérodynamique n'est pas poreuse mais pleine et ne permet pas le passage des ondes en direction des alvéoles du renfort.

Aussi, la présente invention vise à pallier aux inconvénients de l'art antérieur en proposant une nacelle possédant une surface traitée sur le plan acoustique supérieure à celle de l'art antérieur.

A cet effet, l'invention a pour objet une nacelle d'aéronef selon la revendication 1, comportant une entrée d'air avec une lèvre prolongée vers l'arrière par un conduit permettant de canaliser un flux d'air en direction d'une motorisation, ledit conduit comportant au moins un panneau pour le traitement acoustique comprenant de l'extérieur vers l'intérieur une couche poreuse acoustiquement résistive, au moins une structure alvéolaire dont les cellules sont dimensionnées pour le traitement acoustique et une couche réflectrice ou imperméable, ladite couche réflectrice comportant à proximité de son extrémité orientée vers la lèvre un pan incliné de manière à être reliée à la lèvre, une structure alvéolaire étant en contact avec le pan incliné de la couche réflectrice, le pan incliné formant avec la tangente à la couche acoustiquement résistive un angle inférieur à 30°, caractérisée en ce que la structure alvéolaire est intercalée entre ledit pan incliné de la couche réflectrice et une couche poreuse acoustiquement résistive, les cellules de la structure alvéolaire étant dimensionnées pour le traitement acoustique.

Cette caractéristique permet de répartir les efforts de compression subis par la structure alvéolaire sur une plus grande surface si bien que la pression exercée par lesdits efforts de compression sur ladite structure alvéolaire est nettement moins importante que pour l'art antérieur. Par conséquent, dans la mesure où les contraintes de compression sont sensiblement inférieures, il est possible de choisir pour les cellules de la structure alvéolaire un diamètre adapté pour le traitement acoustique, ce diamètre étant supérieur à celui nécessaire pour résister aux efforts de compression. Ainsi, contrairement à l'art antérieur, les cellules de la structure alvéolaire sont dimensionnées pour le traitement acoustique et non pas pour la résistance à la compression si bien que la surface traitée sur le plan acoustique est augmentée.

D'autres caractéristiques et avantages ressortiront de la description qui va suivre de l'invention, description donnée à titre d'exemple uniquement, en regard des dessins annexés sur lesquels :
- la figure 1 est une coupe schématique selon un plan radial d'une partie de l'avant d'une nacelle d'aéronef selon l'art antérieur,
- la figure 2 est une coupe illustrant la zone de jonction entre la lèvre et le panneau assurant la fonction de traitement acoustique selon une variante de l'art antérieur,
- la figure 3 est une coupe illustrant la zone de jonction entre la lèvre et le panneau assurant la fonction de traitement acoustique selon une autre variante de l'art antérieur,
- la figure 4 est une coupe illustrant la zone de jonction entre une lèvre et un panneau pour le traitement acoustique selon une variante de l'invention, et
- la figure 5 est une coupe illustrant la zone de jonction entre une lèvre et un panneau pour le traitement acoustique selon une autre variante de l'invention.

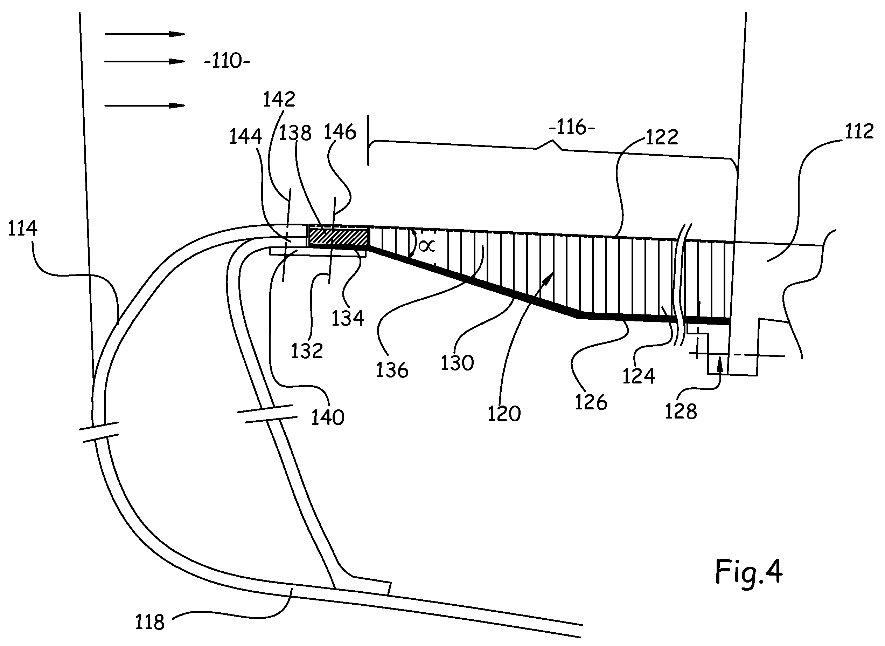

Sur la figure 4, on a représenté en détails une entrée d'air 110 permettant de canaliser un flux d'air en direction d'une motorisation 112 d'une nacelle d'aéronef. L'entrée d'air 110 comprend une lèvre 114 dont la surface en contact avec les flux aérodynamiques est prolongée à l'intérieur de la nacelle par un conduit intérieur 116 de sections sensiblement circulaires et à l'extérieur de la nacelle par une paroi extérieure 118 de sections sensiblement circulaires.

Ce conduit 116 est constitué d'au moins un panneau 120 ou de plusieurs panneaux reliés entre eux.

De manière connue, le panneau 120 comprend de l'extérieur vers l'intérieur une couche poreuse acoustiquement résistive 122, au moins une structure alvéolaire 124 et une couche réflectrice ou imperméable 126. En variante, le panneau 120 peut comprendre plusieurs structures alvéolaires superposées entre lesquelles sont prévues des couches poreuses acoustiquement résistives. Les cellules de la ou des structure(s) alvéolaire(s) 124 sont dimensionnées pour assurer un traitement acoustique optimisé.

Selon un mode de réalisation, la structure alvéolaire se présente sous la forme d'un nid d'abeilles et la couche réflectrice sous la forme d'une tôle.

Le panneau pour le traitement acoustique 120 est relié à la motorisation 112 par tous moyens appropriés. A titre d'exemple, une bride 128 peut assurer la liaison entre la couche réflectrice 126 du panneau pour le traitement acoustique et une collerette prévue à l'avant de la motorisation 112.

Les moyens de liaison entre le panneau pour le traitement acoustique 120 et la motorisation ne sont pas plus détaillés car ils sont connus de l'homme du métier. Le panneau pour le traitement acoustique 120 est relié directement ou indirectement à la lèvre 114. A cet effet, la couche réflectrice 126 comprend à proximité de son extrémité orientée vers la lèvre 114 un pan incliné 130 de manière à réduire l'épaisseur du panneau acoustique pour permettre sa fixation à la lèvre 114. Ainsi, les moyens 132 de liaison entre le panneau 120 et la lèvre 114 sont prévus au droit d'une bande 134 au niveau de l'extrémité de la couche réflectrice 126, disposée sensiblement parallèle à la couche poreuse acoustiquement résistive 122.

Le panneau 120 pour le traitement acoustique comprend une structure alvéolaire 136 intercalée entre la couche poreuse acoustiquement résistive 122 et le pan incliné 130 de la couche réflectrice.

Selon l'invention, le pan incliné 130 forme avec la tangente à la couche acoustiquement résistive un angle a inférieur à 30°.

Cette caractéristique permet de répartir les efforts de compression subis par la structure alvéolaire 136 sur une plus grande surface si bien que la pression exercée par lesdits efforts de compression sur ladite structure alvéolaire 136 est nettement moins importante que pour l'art antérieur. Par conséquent, dans la mesure où les contraintes de compression sont sensiblement inférieures, il est possible de choisir pour les cellules de la structure alvéolaire 136 un diamètre adapté pour le traitement acoustique, ce diamètre étant supérieur à celui nécessaire pour résister aux efforts de compression. Ainsi, contrairement à l'art antérieur, les cellules de la structure alvéolaire 136 sont dimensionnées pour le traitement acoustique et non pas pour la résistance à la compression si bien que la surface traitée sur le plan acoustique est augmentée.

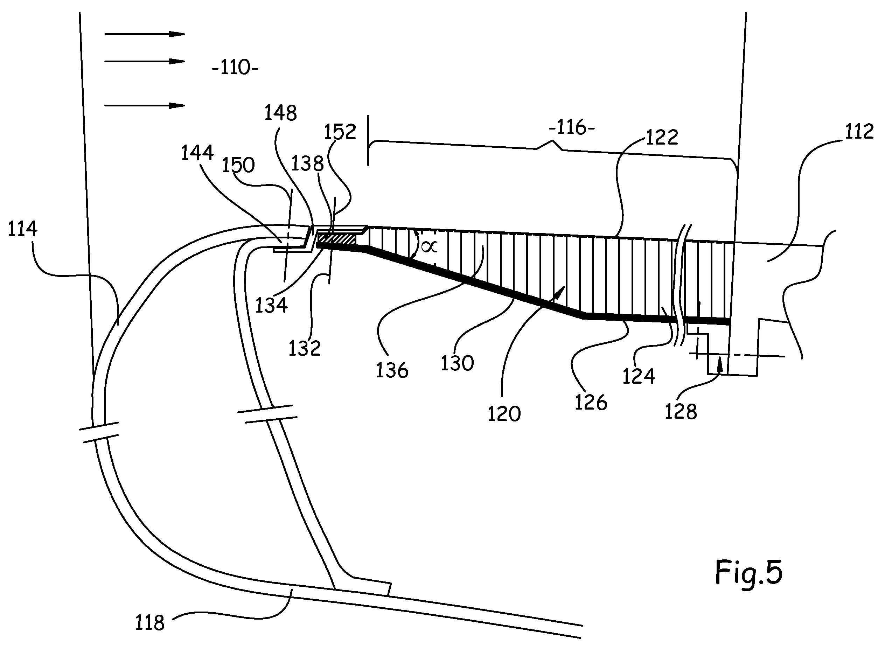

Selon les variantes illustrées sur les figures 4 et 5, la couche réflectrice 126 est reliée à la couche acoustiquement résistive 122. De préférence, une cale 138 est intercalée entre la couche réflectrice 126 et la couche acoustiquement résistive 122 afin que les cellules de la structure alvéolaire 136 aient toute une hauteur suffisante pour assurer un traitement acoustique.

Un élément de jonction 140 assure la jonction entre la lèvre 114 et le panneau pour le traitement acoustique 120.

Selon la variante illustrée sur la figure 4, la couche acoustiquement résistive 122 ne comprend pas de décrochement pour la liaison avec l'entrée d'air et l'élément de jonction 140 comprend une première partie adapté pour qu'elle soit plaquée et fixée par des moyens de liaison 142 à la face intérieure de la lèvre 114, le rebord 144 du cadre avant étant de préférence intercalé entre l'élément de jonction 140 et la lèvre 114. En complément, l'élément de jonction 140 comprend une seconde partie adaptée pour qu'elle soit plaquée et fixée par des moyens de liaison 146 à la face intérieure de la couche réflectrice 126.

Selon une variante illustrée sur la figure 5, l'élément de jonction 148 comprend une première partie adaptée pour qu'elle soit plaquée et fixée par des moyens de liaison 150 à la face intérieure de la lèvre 114, le rebord 144 du cadre avant étant de préférence intercalé entre l'élément de jonction 148 et la lèvre 114. En complément, l'élément de jonction 148 comprend une seconde partie adaptée pour qu'elle soit plaquée et fixée par des moyens de liaison 152 à la face extérieure de la couche acoustiquement résistive 122 qui comprend un décrochement pour loger cette seconde partie de l'élément de jonction 148. Avantageusement, cette seconde partie a une épaisseur réduite par rapport au reste de l'élément de jonction et/ou comprend une extrémité en biseau afin que la couche acoustiquement résistive 122 ne comprenne pas de plis de renfort.

## Revendications

1. Nacelle d'aéronef comportant une entrée d'air (110) avec une lèvre (114) prolongée vers l'arrière par un conduit (116) permettant de canaliser un flux d'air en direction d'une motorisation (112), ledit conduit (116) comportant au moins un panneau (120) pour le traitement acoustique comprenant de l'extérieur vers l'intérieur une couche poreuse acoustiquement résistive (122), au moins une première structure alvéolaire (124) dont les cellules sont dimensionnées pour le traitement acoustique et une couche réflectrice ou imperméable (126), ladite nacelle comportant également une liaison entre ledit panneau (120) pour le traitement acoustique et la lèvre (114) qui comprend :
- une bande (134) prévue au niveau de l'extrémité de la couche réflectrice (126), parallèle à la couche poreuse acoustiquement résistive (122) et reliée à la lèvre (114),
- à proximité de l'extrémité de la couche réflectrice (126) orientée vers la lèvre (114), un pan incliné (130) qui relie ladite bande (134) au reste de la couche réflectrice (126),
- une deuxième structure alvéolaire (136) en contact avec le pan incliné (130) et intercalée entre ledit pan incliné (130) et ladite couche poreuse acoustiquement résistive (122), **caractérisée en ce que** le pan incliné (130) forme avec la tangente à la couche acoustiquement résistive (122) un angle inférieur à 30° et **en ce que** la deuxième structure alvéolaire (136) comprend des cellules dimensionnées pour le traitement acoustique.

2. Nacelle d'aéronef selon la revendication 1, **caractérisée en ce que** la liaison entre ledit panneau (120) pour le traitement acoustique et la lèvre (114) comprend un élément de jonction (140, 148).

3. Nacelle d'aéronef selon la revendication 2, **caractérisée en ce que** l'élément de jonction (140) comprend une première partie adaptée pour être plaquée et fixée à la face intérieure de la lèvre (114), et une seconde partie adaptée pour être plaquée et fixée à la face intérieure de la bande (134) de la couche réflectrice (126).

4. Nacelle d'aéronef selon la revendication 2, **caractérisée en ce que** l'élément de jonction (148) comprend une première partie adaptée pour être plaquée et fixée à la face intérieure de la lèvre (114) et une seconde partie adaptée pour être plaquée et fixée à la face extérieure de la couche acoustiquement résistive (122) qui comprend un décrochement pour loger ladite seconde partie de l'élément de jonction (148).

5. Nacelle d'aéronef selon la revendication 4, **caractérisée en ce que** ladite seconde partie de l'élément de jonction (148) a une extrémité en biseau.

6. Nacelle d'aéronef selon la revendication 4 ou 5, **caractérisée en ce que** ladite seconde partie de l'élément de jonction (148) a une épaisseur réduite par rapport au reste de l'élément de jonction.

7. Nacelle d'aéronef selon l'une quelconque des revendications précédentes, **caractérisée en ce que** la liaison entre ledit panneau (120) pour le traitement acoustique et la lèvre (114) comprend une cale (138) intercalée entre la bande (134) et la couche poreuse acoustiquement résistive (122) afin que les cellules de la deuxième structure alvéolaire (136) aient toute une hauteur suffisante pour assurer un traitement acoustique.

## Patentansprüche

1. Gondel eines Luftfahrzeugs mit einem Lufteinlass (110), der einen Wulst (114) aufweist, der nach hinten durch einen Kanal (116) verlängert ist, der es gestattet, eine Luftströmung in Richtung einer Motorisierung (112) zu kanalisieren, wobei der Kanal (116) wenigstens eine Platte (120) für die Schallbehandlung aufweist, mit einer von außen nach innen porösen schalldämpfenden Schicht (122), mit wenigstens einer Kammerstruktur (124), deren Zellen für die Schallbehandlung ausgelegt sind, und mit einer schallreflektierenden oder -undurchlässigen Schicht (126), wobei die Gondel ebenfalls eine Verbindung zwischen der Platte (120) für die Schallbehandlung und dem Wulst (114) aufweist, mit:
- einem Band (134), das im Bereich des Endes der reflektierenden Schicht (126) vorgesehen ist, das parallel zur porösen schalldämpfenden Schicht (122) ist und mit dem Wulst (114) verbunden ist,
- in der Nähe des dem Wulst (114) zugewandten Ende der reflektierenden Schicht (126) einer geneigten Seitenfläche (130), die das Band (134) mit dem Rest der reflektierenden Schicht (126) verbindet,
- einer zweiten Kammerstruktur (136), die in Kontakt mit der geneigten Seitenfläche (130) steht und zwischen der geneigten Seitenfläche (130) und der porösen schalldämpfenden Schicht (122) angeordnet ist, **dadurch gekennzeichnet, dass** die geneigte Seitenfläche (130) mit der Tangente der schalldämpfenden Schicht (122) einen Winkel kleiner 30° bildet und dass die zweite Kammerstruktur (136) Zellen aufweist, die für die Schallbehandlung ausgelegt sind.

2. Gondel eines Luftfahrzeugs nach Anspruch 1, **dadurch gekennzeichnet, dass** die Verbindung zwischen der Platte (120) für die Schallbehandlung und dem Wulst (114) ein Verbindungselement (140, 148) aufweist.

3. Gondel eines Luftfahrzeugs nach Anspruch 2, **dadurch gekennzeichnet, dass** das Verbindungselement (140) einen ersten Teil aufweist, der dazu eingerichtet ist, an der Innenseite des Wulstes (114) angebracht und befestigt zu sein, und einen zweiten Teil, der dazu eingerichtet ist, an der Innenseite des Bandes (134) der reflektierenden Schicht (126) angebracht und befestigt zu sein.

4. Gondel eines Luftfahrzeugs nach Anspruch 2, **dadurch gekennzeichnet, dass** das Verbindungselement (148) einen ersten Teil aufweist, der dazu eingerichtet ist, an der Innenseite des Wulstes (114) angebracht und befestigt zu sein, und einen zweiten Teil, der dazu eingerichtet ist, an der Außenseite der schalldämpfenden Schicht (122) angebracht und befestigt zu sein, die einen Einzug aufweist, um den zweiten Teil des Verbindungselements (148) aufzunehmen.

5. Gondel eines Luftfahrzeugs nach Anspruch 4, **dadurch gekennzeichnet, dass** der zweite Teil des Verbindungselements (148) ein abgeschrägtes Ende hat.

6. Gondel eines Luftfahrzeugs nach Anspruch 4 oder 5, **dadurch gekennzeichnet, dass** der zweite Teil des Verbindungselements (148) eine verringerte Dicke bezüglich des übrigen Verbindungselements hat.

7. Gondel eines Luftfahrzeugs nach einem der vorhergehenden Ansprüche, **dadurch gekennzeichnet, dass** die Verbindung zwischen der Platte (120) für die Schallbehandlung und dem Wulst (114) ein Zwischenstück (138) umfasst, das zwischen dem Band (134) und der porösen schalldämpfenden Schicht (122) angeordnet ist, damit die Zellen der zweiten Kammerstruktur (136) eine ausreichende Höhe aufweisen, um eine Schallbehandlung zu gewährleisten.

## Claims

1. Aircraft nacelle that comprises an air intake (110) with a lip (114) that is extended toward the rear by a pipe (116) that makes it possible to channel an air flow in the direction of a power plant (112), said pipe (116) comprising at least one acoustic treatment panel (120) comprising from the outside to the inside an acoustically resistive porous layer (122), at least one first alveolar structure (124) whose cells are sized for acoustic treatment, and a reflective or impermeable layer (126), said nacelle comprising a connection between said acoustic treatment panel (120) and the lip (144) that comprises:
- a strip (134) at the end of the reflective layer (126), arranged parallel to the acoustically resistive porous layer (122) and connected to the lip (114),
- near the end of the reflective layer (126) oriented toward the lip (114), an inclined face (130) that connects said strip (134) to the rest of the reflective layer (126),
- a second alveolar structure (136) in contact with the inclined face (130) and inserted between said inclined face (130) and said acoustically resistive porous layer (122), **characterized in that** the inclined face (130) forms with the tangent to the acoustically resistive layer (122) an angle of less than 30° and **in that** the second alveolar structure (136) comprises cells sized for acoustic treatment.

2. Aircraft nacelle according to Claim 1, wherein the connection between said acoustic treatment panel (120) and the lip (114) comprises a junction element (140, 148).

3. Aircraft nacelle according to Claim 2, wherein the junction element (140) comprises a first part that is adapted so that it is flattened and attached to the inside surface of the lip (114), and a second part so that it is flattened and attached to the inside surface of the strip (134) of the reflective layer (126).

4. Aircraft nacelle according to Claim 2, wherein the junction element (148) comprises a first part that is adapted so that it is flattened and attached to the inside surface of the lip (114) and a second part that is adapted so that it is flattened and attached to the outside surface of the acoustically resistive layer (122) that comprises an offset for housing said second part of the junction element (148).

5. Aircraft nacelle according to Claim 4, wherein said second part of the junction element (148) has a beveled end.

6. Aircraft nacelle according to Claim 4 or 5, wherein said second part of the junction element (148) has a thickness that is reduced relative to the rest of the junction element.

7. Aircraft nacelle according to any of the preceding claims, wherein the connection between said acoustic treatment panel (120) and the lip (114) comprises a block (138) that is inserted between the strip (134) and the acoustically resistive layer (122) so that the cells of the alveolar structure (136) all have an adequate height for providing acoustic treatment.
